# EUROPÄISCHE PATENTANMELDUNG

(11) **EP 2 527 872 A1**
(43) Veröffentlichungstag der Anmeldung: **28.11.2012**
(21) Anmeldenummer: 12168867.5
(22) Anmeldetag: 22.05.2012
(51) Int. Cl.: G01S 13/92, G08G 1/054, G06K 9/00

(54) **Verfahren zur Ausrichtung und Verfahren zur Kontrolle der Ausrichtung eines Verkehrsüberwachungsgerätes zu einem Fahrbahnrand**

(30) Priorität: 26.05.2011 DE 102011050660
(71) Anmelder: JENOPTIK Robot GmbH, 40789 Monheim am Rhein (DE)
(72) Erfinder: Gebauer, Christoph, 50937 Köln (DE)
(74) Vertreter: Schaller, Renate

(57) **Zusammenfassung**

Die Erfindung betrifft ein Verfahren zur Ausrichtung eines Verkehrsüberwachungsgerätes (VÜG) mit einem Radarsensor (2) und einer Kamera (4) zu einem Fahrbahnrand (1). Die Kameraachse (5) und die Radarachse (3) werden bei der Montage des VÜGs vorteilhaft in einem Winkel zueinander justiert, den sie in einer Betriebsposition miteinander einschließen, bei dem die Kameraachse (5) einen Soll-Kamerawinkel (Φ_{K-Soll}) und die Radarachse (3) einen Soll-Radarwinkel (Φ_{R-Soll}) mit dem Fahrbahnrand (1) einschließen. Das VÜG wird in einer Ausgangsposition aufgestellt, in der mit Augenmaß der Soll-Kamerawinkel (Φ_{K-Soll}) näherungsweise eingestellt wird. Es wird eine Abbildung als Digitalbild erstellt aus der rechnerisch der Ist-Fluchtpunkt (P_{F-Ist}) für über die Fahrbahnmarkierungen projizierte Geraden bestimmt und mit einem vorgegebenen Soll-Fluchtpunkt (P_{F-Soll}) verglichen wird. Das VÜG wird solange horizontal geschwenkt und es werden währenddessen weitere Abbildungen erstellt, aus denen jeweils der momentane Ist-Fluchtpunkt (P_{F-Ist}) ermittelt und mit dem vorgegebenen Soll-Fluchtpunkt (P_{F-Soll}) verglichen wird, bis dessen Abweichung vom Soll-Fluchtpunkt (P_{F-Soll}) innerhalb einer vorgegebenen Toleranzgrenze liegt.

## Beschreibung

In der Verkehrsmesstechnik kommen zur Geschwindigkeitsmessung Verkehrsüberwachungsgeräte (VÜG) mit Radarsensoren zum Einsatz, die am Fahrbahnrand aufgestellt werden und die Geschwindigkeit eines vorbeifahrenden Fahrzeuges mittels Dopplereffekt bestimmen. Zwischen der Verkehrsrichtung, bestimmt durch den Verlauf des Fahrbahnrandes und der Mittelachse des von einem Radarsensor ausgesandten Radar-Strahls (Radarachse), muss ein vorgegebener horizontaler Winkel (Soll-Radarwinkel Φ_{R-Soll}) eingerichtet und eingehalten werden, der bei der Geschwindigkeitsmessung mit zu berücksichtigen ist, da nicht die Geschwindigkeit auf den Radarsensor zu, sondern die Geschwindigkeit in Verkehrsrichtung von Interesse ist.
Bei der Berechnung der Geschwindigkeit wird der Soll-Radarwinkel Φ_{R-Soll} durch den Faktor cos(Φ_{R-Soll}) berücksichtigt. Die Geschwindigkeit ergibt sich dann aus dem Quotienten der gemessenen Dopplerfrequenz multipliziert mit der Sendefrequenz des Radarsensors und dem zweifachen Cosinus des Soll-Radarwinkels Φ_{R-Soll}.

Den größten Einfluss auf die Genauigkeit der Messungen haben mögliche Abweichungen des tatsächlich in der Betriebsposition des Radarsensors eingerichteten Ist-Radarwinkels Φ_{R-Ist}, vom Soll-Radarwinkel Φ_{R-Soll}, der in der Regel bereits in einer Recheneinheit des Radarsensors abgespeichert, für die Geschwindigkeitsberechnung zur Verfügung steht. Aufstell- und Ausrichtevorschriften gewährleisten, dass der Radarsensor korrekt aufgestellt und ausgerichtet wird.

Zur Erläuterung des Standes der Technik und der Erfindung sollen die Begriffe: Ausgangsposition, Ausrichtposition der Kamera, Betriebsposition des Radarsensors, Betriebsposition der Kamera sowie Betriebsposition des VÜG verwendet werden, die nachfolgend erläutert werden und so auch auf das erfindungsgemäße Verfahren zutreffen.

In allen genannten Positionen, ist das VÜG und damit der Radarsensor und die Kamera an einem gleichen Ort mit einem Abstand zum Fahrbahnrand aufgestellt.
Das VÜG wird in einer Ausgangsposition aufgestellt, wobei die Kamera und damit deren optische Achse (Kameraachse) mit Augenmaß entsprechend der anschließend einzurichtenden Position ausgerichtet sind. Die Kameraachse und die Radarachse schließen dabei gemäß dem Stand der Technik einen vorgegebenen, vorteilhaft bereits werksseitig eingerichteten horizontalen Winkel miteinander ein. Bei einem Verfahren gemäß der Erfindung muss dieser Winkel lediglich bekannt sein, er kann auch Null sein.

Die anschließend einzurichtende Position, ist die Ausrichtposition.

In dieser Position ist die Radarachse bereits in ihrer Betriebsposition, in der die Radarachse den Soll-Radarwinkel mit dem Fahrbahnrand einnimmt.
Gemäß dem Stand der Technik ist in der Ausrichtposition die Kameraachse fluchtend zum Fahrbahnrand ausgerichtet. Gemäß der Erfindung schließt die Kameraachse einen nahezu beliebigen, jedoch bekannten, vorgegebenen Soll-Kamerawinkel mit dem Fahrbahnrand ein. Dieser kann gleich dem Soll-Radarwinkel sein, kann Null sein oder einen anderen sinnvoller Weise dazwischen liegenden Wert aufweisen. Sowohl im Stand der Technik als auch gemäß der Erfindung kann auch die Kamera in der Ausrichtposition bereits in einer vorgegebenen Betriebsposition sein. Der Soll-Kamerawinkel wäre dann gleich einem Soll-Fotowinkel, den die Kameraachse in ihrer Betriebsposition mit dem Fahrbahnrand einnimmt.

Ist dies nicht der Fall, wird die Kameraachse anschließend um einen vorgegebenen Schwenkwinkel geschwenkt, bis sich die Kameraachse ebenfalls in ihrer Betriebsposition befindet, in der sie den Soll-Fotowinkel mit der Fahrbahn einschließt.

Erst wenn der Radarsensor und die Kamera in ihrer Betriebsposition sind, befindet sich das VÜG insgesamt in seiner Betriebsposition.

Eine übliche Aufstell- und Ausrichtvorschrift lautet wie folgt:
Ein VÜG, welches einen Radarsensor und eine Kamera umfasst, wird in einem Abstand zu einem Fahrbahnrand in einer Ausgangsposition, der wenigstens im Messbereich des Radarsensors geradlinig verläuft, aufgestellt, wobei die Kameraachse mit Augenmaß fluchtend zum Fahrbahnrand eingerichtet wird. Die Kamera und der Radarsensor wurden zuvor bei der Montage des VÜG werksseitig zueinander so justiert, dass die Radarachse und die Kameraachse den Soll-Radar-Winkel miteinander einschließen.

Anschließend wird z. B. eine Pylone, in einem Abstand von mindestens 10 m vor dem VÜG in einer gleichen Entfernung wie das VÜG, genauer des Drehpunktes der Kamera, senkrecht zum Fahrbahnrand aufgestellt. Dann wird das VÜG mit Radarsensor und Kamera, aus dieser Ausgangsposition heraus solange horizontal geschwenkt, bis eine in den Abbildungsstrahlengang der Kamera eingeblendete, die Kameraachse schneidende Visierlinie die abgebildete Pylone vertikal mittig überlagert. Damit ist die Kameraachse parallel zur Fahrbahn ausgerichtet, womit sich der Radarsensor in der Betriebsposition, die Kamera jedoch erst in der Ausrichtposition befindet. Jetzt wird die Kamera um einen bekannten Winkel in eine von mehreren möglichen Positionen, die durch Raststellungen vorgegeben sein können, in ihre Betriebsposition geschwenkt und arretiert, womit auch der Winkel bekannt ist, den die Kameraachse und die Radarachse in der Betriebsposition des VÜG miteinander einschließen.

Das VÜG befindet sich jetzt in seiner Betriebsposition und die Kameraachse und die Radarachse schließen wieder einen festen bekannten Winkel miteinander ein.

Selbstverständlich ist die Winkelbeziehung zwischen der Kameraachse und der Radarachse, zumindest während der Radarsensor in Funktion ist, auch in vertikaler Richtung konstant. Diese spielt jedoch für das Verfahren keine Rolle.

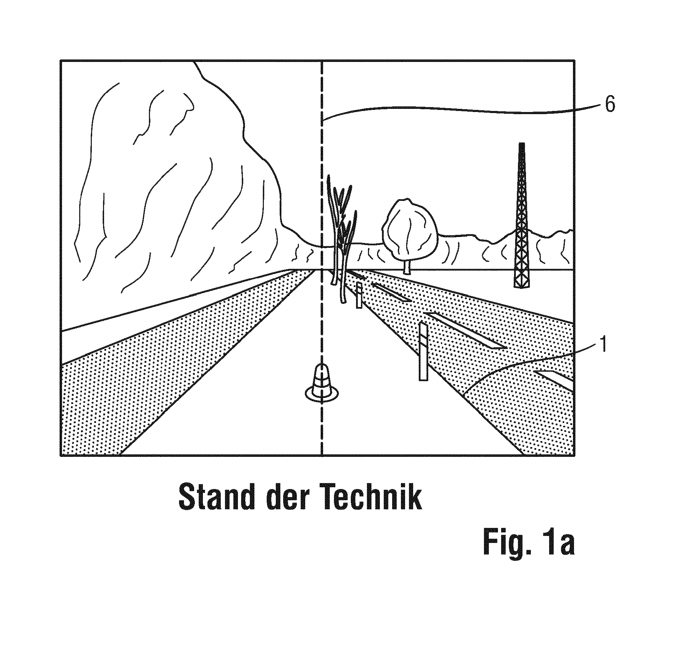

In Fig. 1a ist die graphische Darstellung eines Druckbildes einer Beispielszene gezeigt, wie es von der Kamera aufgenommen wird, wenn diese sich in der Ausrichtposition befindet, in der die Kameraachse parallel zum Fahrbahnrand ausgerichtet ist. In der Abbildung ist eine Pylone zu sehen, die z. B. 10 m vor dem VÜG aufgestellt ist. Die Visierlinie der Kamera, die vertikal durch die Kameraachse verläuft, überdeckt eine gedachte Symmetrielinie der Pylone. Die Radarachse ist in dieser Position entsprechend ihrer Betriebsposition ausgerichtet.

Bei der Ausrichtung des VÜG in die Ausrichtposition der Kamera, können verschiedene Einflussfaktoren dazu führen, dass trotz exakter Befolgung der Aufstell- und Ausrichtvorschrift der Radarsensor nicht korrekt ausgerichtet wird, weshalb die korrekte Ausrichtung kontrolliert werden sollte. Eine solche Kontrolle sollte auch während des Betriebes des VÜGs wiederholt werden, um eine korrekte Ausrichtung zu bestätigen bzw. um Veränderungen der Ausrichtung festzustellen.

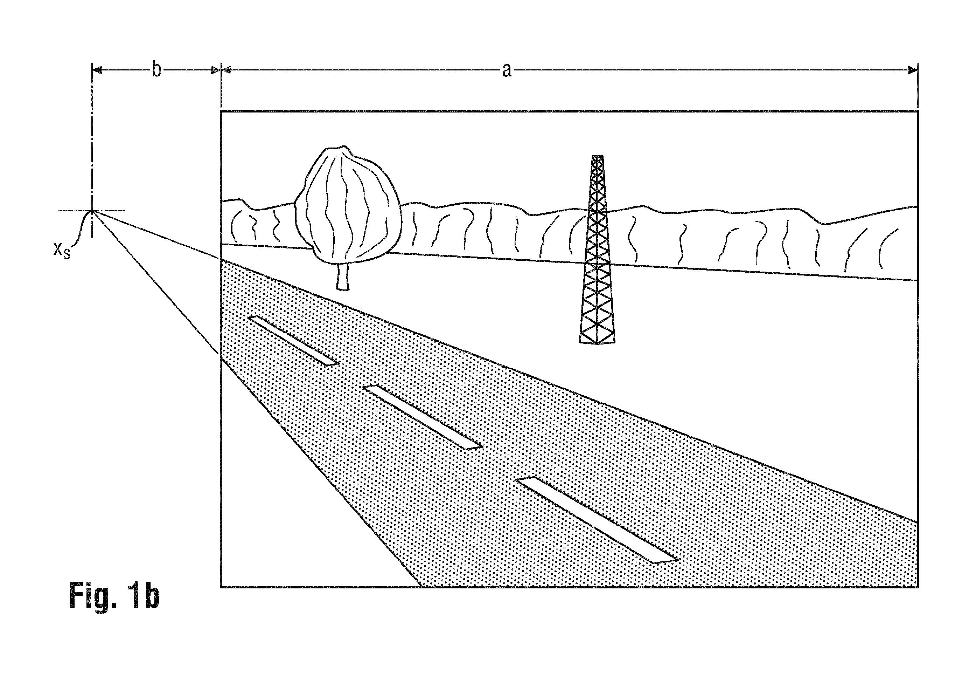

Die Kontrolle erfolgt anhand eines Druckbildes wie es mit einer Kamera aufgenommen wird, die ebenfalls in Betriebsposition ausgerichtet ist, über ein graphisches Verfahren, welches anhand von **Fig. 1 b** erläutert werden soll.

Tatsächlich wird kontrolliert, ob der ableitbare Ist-Fotowinkel Φ_{F-Ist} dem Soll-Fotowinkel Φ_{F-Soll} entspricht und aus dieser Kenntnis auf eine mögliche Abweichung des Ist-Radarwinkels Φ_{R-Ist} vom Soll-Radarwinkel Φ_{R-Ist} geschlossen.

Es werden die Fahrbahnränder überdeckende Geraden eingezeichnet und bis zu ihrem Schnittpunkt xₛ verlängert. Aus dem senkrechten Abstand b des Schnittpunktes (Fluchtpunkt) vom Bildrand des Druckbildes, dem horizontalen Öffnungswinkel α des für die Kamera verwendeten Objektives, der sich aus der Objektivbrennweite und der halben horizontalen Bildfeldbreite der Kamera ergibt, sowie der Breite a des Druckbildes, kann der Ist-Fotowinkel Φ_{F-Ist} näherungsweise durch die Formel: Φ_{F-Ist} = α(a/2 + b) / a ermittelt werden.

Für das graphische Verfahren werden neben einem Drucker, für ein möglichst großformatiges Druckbild, weitere Hilfsmittel sowie eine große Arbeitsfläche benötigt. Das Verfahren ist daher ungeeignet, um am Messort direkt eventuelle Abweichungen vom Soll-Fotowinkel Φ_{F-Soll} und damit auch vom Soll-Radarwinkel Φ_{R-Soll} zu überprüfen.

Der Erfindung liegt die Aufgabe zugrunde ein verbessertes Verfahren zur Ausrichtung und ein Verfahren zur Kontrolle der Ausrichtung eines VÜG, umfassend einen Radarsensor und eine Kamera, zu einem Fahrbahnrand zu finden, das eine genauere Ausrichtung und einfachere Kontrolle der Ausrichtung ermöglicht. Darüber hinaus soll das Verfahren schneller und automatisiert durchführbar sein.

Diese Aufgabe wird für ein Verfahren zur Ausrichtung eines Verkehrsüberwachungsgerätes (VÜG) in eine Betriebsposition für einen Radarsensor zu einem Fahrbahnrand einer Fahrbahn, wobei das VÜG einen Radarsensor mit einer Radarachse und eine Kamera mit einem Matrixempfänger und einer Kameraachse umfasst, die in einer Betriebsposition des Radarsensors einen Soll-Radarwinkel (Φ_{R-Soll}) und einen Soll-Kamerawinkel (Φ_{K-Soll}) mit dem Fahrbahnrand einschließen, wie folgt gelöst.
Voraussetzung ist, dass der Winkel den die Radarachse und die Kameraachse im montierten VÜG miteinander einschließen bekannt ist. Dieser beträgt einen Wert zwischen Null und einem Wert gleich dem Soll-Radarwinkel (Φ_{R-Soll}). Vorteilhaft kann ein Winkel einjustiert sein, den die Kameraachse und die Radarachse in der Betriebsstellung des VÜG miteinander einschließen.
Das VÜG wird in einem Abstand zu dem Fahrbahnrand aufgestellt und mit Augenmaß wird der Soll-Kamerawinkel (Φ_{K-Soll}) näherungsweise eingestellt in dem das VÜG um eine vertikale Achse gedreht wird, womit sich das VÜG in einer Aufstellposition befindet. Jetzt wird mit der Kamera eine erste Abbildung als Digitalbild erstellt, aus der Geraden in Fahrtrichtung abgeleitet werden, rechnerisch ein Ist-Fluchtpunkt (P_{F-Ist}) für die Geraden bestimmt wird und mit einem vom Soll-Kamerawinkel (Φ_{K-Soll}) abhängigen, vorgegebenen Soll-Fluchtpunkt (P_{F-Soll}) verglichen wird. Das VÜG wird solange horizontal geschwenkt und währenddessen weitere Abbildungen erstellt, aus denen jeweils der momentane Ist-Fluchtpunkt (P_{F-Ist}) ermittelt und mit dem vorgegebenen Soll-Fluchtpunkt (P_{F-Soll}) verglichen wird, bis dessen Abweichung vom Soll-Fluchtpunkt (P_{F-Soll}) innerhalb einer vorgegebenen Toleranzgrenze liegt, womit der Radarsensor (2) in Betriebsposition ausgerichtet ist. Wurde die Kameraachse und die Radarachse wie erläutert bei der Montage zueinander justiert, ist auch die Kamera in Betriebsposition ausgerichtet, womit das VÜG insgesamt in Betriebsposition ist.

Sofern der bekannte Winkel zwischen der Radarachse und der Kameraachse nicht ein Winkel ist bei dem sich auch die Kamera in ihrer Betriebsposition befindet, wenn der Radarsensor ausgerichtet ist, wird die Kamera nun in ihre Betriebsposition um einen vorgegebenen Schwenkwinkel geschwenkt, womit auch die Kamera in Betriebsposition ausgerichtet ist und mit dem Fahrbahnrand einen Soll-Kamerawinkel (Φ_{K-Soll}) einschließt.

Vorteilhaft werden bei der rechnerischen Ermittlung des Ist-Fluchtpunktes (P_{F-Ist}) der Geraden nur die sich zwischen den Geraden ergebenden Schnittpunkte xₛ herangezogen, die abhängig von der Lage des Soll-Fluchtpunktes (P_{F-Soll}) relativ zum Digitalbild seitlich außerhalb des Digitalbildes liegen und aus denen der geometrische Mittelpunkt als Ist-Fluchtpunkt (P_{F-Ist}) bestimmt wird.

Es ist von Vorteil wenn das Digitalbild zunächst mit einem geeigneten Schwellwert in ein Binärbild transformiert wird und anschließend einer Hough-Transformation zur Erkennung von Geraden, die insbesondere durch die Abbildung der Fahrbahnmarkierung generiert wurden, unterworfen wird.

Dabei ist es vorteilhaft, wenn das Digitalbild zuerst einer Kantendetektion und das Ergebnis einer Hough-Transformation unterworfen wird, zur Erkennung von Geraden, die insbesondere durch die Abbildung der Fahrbahnmarkierung generiert wurden.

Die Lage des Soll-Fluchtpunktes (P_{F-Soll}), bestimmt durch seinen Abstand d vom Rand des Matrixempfängers kann vorteilhaft aus der Formel d = c(Φ_{K-Soll}/α -1/2) ermittelt werden, in der c die Bildfeldbreite der Kamera, bestimmt durch die Geometrie des Matrixempfängers, und α der Öffnungswinkel des Objektives der Kamera ist.

Die Aufgabe wird für ein Verfahren zur Kontrolle und gegebenenfalls Korrektur von Abweichungen der Ausrichtung eines, gemäß Anspruch 1, zuvor ausgerichteten Verkehrsüberwachungsgerätes (VÜG) wie folgt gelöst.

Analog dem Verfahren nach Anspruch 1 wird eine erste Abbildung als Digitalbild erstellt, rechnerisch der Ist-Fluchtpunkt (P_{F-Ist}) ermittelt und mit einem vom Soll-Kamerawinkel (Φ_{K-Soll}) abhängigen, vorgegebenen Soll-Fluchtpunkt (P_{F-Soll}) verglichen und das VÜG, sofern die Abweichung des Ist-Fluchtpunktes (P_{F-Ist}) vom Soll-Fluchtpunkt (P_{F-Soll}) nicht innerhalb einer vorgegebenen Toleranzgrenze liegt, solange horizontal geschwenkt wird und währenddessen weitere Abbildungen erstellt, aus denen jeweils der momentane Ist-Fluchtpunkt (P_{F-Ist}) ermittelt und mit dem vorgegebenen Soll-Fluchtpunkt (P_{F-Soll}) verglichen wird, bis dessen Abweichung vom Soll-Fluchtpunkt (P_{F-Soll}) innerhalb der vorgegebenen Toleranzgrenze liegt.
Grundsätzlich kann das Kontrollverfahren auch durchgeführt werden für die Ausrichtung von VÜGs die nicht gemäß dem Verfahren nach Anspruch 1 ausgerichtet worden sind. Es erscheint jedoch wenig sinnvoll die Ausrichtung mit einem anderen Verfahren vorzunehmen.

Sofern die Kamera nach dem Einrichten der Betriebsposition des Radarsensors um einen vorgegebenen Schwenkwinkel in ihre Betriebsposition geschwenkt wurde, wird vorteilhaft für diese Betriebsposition der Kamera ein neuer Soll-Fluchtpunkt (P_{F-Soll neu}) vorgegeben und mit dem momentanen Ist-Fluchtpunkt (P_{F-Ist}) verglichen, um die korrekte Ausrichtung zu kontrollieren.

Falls der Ist-Fluchtpunkt (P_{F-Ist}) nicht innerhalb einer für den neuen Soll-Fluchpunkt (P_{F-Soll neu}) vorgegebenen Toleranz liegt, werden vorteilhaft die Verfahrensschritte zur Kontrolle wiederholt, bis der momentane Ist-Fluchtpunkt (P_{F-Ist}) innerhalb der vorgegebenen Toleranzgrenze liegt.
Alternativ können Maßnahmen getroffen werden, die eine Verwertung nachfolgender Aufnahmen untersagen, wenn ein momentaner Ist-Fluchtpunkt (P_{F-Ist}) ermittelt wird, der nicht innerhalb der vorgegebenen Toleranzgrenze liegt.

Sowohl das Verfahren zur Ausrichtung, als auch zur Kontrolle können als Software auf dem VÜG bzw. der Kamera installiert sein.
Das Verfahren zur Kontrolle kann online, aber auch offline im Backoffice auf einem Rechner benutzt werden um anhand von erstellten Aufnahmen zu prüfen ob das VÜG richtig ausgerichtet war. Damit ergibt sich die Möglichkeit die Kontrolle auf solche Aufnahmen zu beschränken deren Richtigkeit z. B. im Zusammenhang mit der Ahndung von Geschwindigkeitsverstößen bezweifelt werden.

Anhand der Zeichnungen wird das Verfahren im Folgenden beispielhaft näher erläutert.

Es zeigen:
- Fig. 1a: Darstellung zur Erläuterung eines Verfahrens zum Ausrichten gemäß dem Stand der Technik
- Fig. 1 b: Darstellung zur Erläuterung eines Verfahrens zur Kontrolle gemäß dem Stand der Technik
- Fig. 2: graphische Darstellung eines Digitalbildes einer Beispielsszene
- Fig. 3: Prinzipdarstellung eines Kantenbildes der Beispielsszene gemäß Fig. 2
- Fig. 4: Prinzipskizze eines auf relevanten Geraden reduzierten Kantenbildes der Beispielsszene gemäß Fig. 2
- Fig. 5: Prinzipskizze für den Verlauf der relevanten Geraden um deren Schnittpunkte
- Fig. 6a: graphische Darstellung einer Beispielsszene, bei welcher der Ist-Radarwinkel nicht dem vorgegebenen Soll-Radarwinkel entspricht
- Fig. 6b: Displayanzeige mit einer Beispielsszene gemäß Fig. 6a
- Fig. 7a: graphische Darstellung einer Beispielsszene, bei welcher der Ist-Radarwinkel dem vorgegebenen Soll-Radarwinkel entspricht
- Fig. 7b: Displayanzeige mit einer Beispielsszene gemäß Fig. 7a.

Bei einem erfindungsgemäßen Verfahren bedarf es, im Unterschied zu dem beschriebenen Verfahren gemäß dem Stand der Technik, nicht zwingend der Ausrichtung eines VÜG, umfassend einen Radarsensor und eine Kamera, aus einer Ausgangsposition in eine Ausrichtposition, in der die Kameraachse der Kamera, fluchtend zu einem Fahrbahnrand ausgerichtet ist und der Radarsensor den Soll-Radarwinkel Φ_{R-Soll} einnimmt, um anschließend nur die Kamera von dieser Ausrichtposition aus, um einen vorgegebenen horizontalen Winkel in eine Betriebsposition der Kamera zu schwenken und arretieren.

Vielmehr kann das VÜG vorteilhaft, aus einer beliebigen Ausgangsposition in der die Kameraachse 5 mit Augenmaß so eingerichtet wird, dass die Kameraachse 5 mit dem Fahrbahnrand 1 näherungsweise einen Soll-Fotowinkel Φ_{F-Soll} einschließt, direkt in seine Betriebsposition geschwenkt werden. Die Kamera 4 und der Radarsensor 2 müssen hierfür zuvor bei der Montage des VÜG werksseitig zueinander so justiert werden, dass die Radarachse 3 und die Kameraachse 5 einen vorgegebenen Winkel, nämlich den Winkel miteinander einschließen, den sie in der Betriebsposition des VÜG miteinander einschließen sollen.
Die Kameraachse 5 und die Radarachse 3 können nach der Montage aber auch einen anderen Winkel miteinander einschließen, der lediglich bekannt sein muss. Die Kamera 4 befindet sich dann, wenn der Radarsensor ausgerichtet ist noch nicht in ihrer Betriebsposition, sondern muss anschließend in diese geschwenkt werden.

Es ergibt sich auch dann ein Vorteil im Vergleich zum Stand der Technik, der wenigstens in einem Zeitgewinn liegt, da keine Pylone aufgestellt werden muss.
Weiterhin ist eine genauere Überprüfungsmöglichkeit im Betrieb des VÜG möglich.

Gemäß einem ersten vorteilhaften Ausführungsbeispiel sollen bei einem erfindungsgemäßen Verfahren die Kameraachse 5 und Radarachse 3 werkseitig so zueinander ausgerichtet werden, dass sie einen Winkel miteinander einschließen, den sie in der Betriebsstellung des VÜG miteinander einschließen. Nach der Aufstellung des VÜG in einer Ausgangsposition bis hin zur Ausrichtung in dessen Betriebsposition, wird mit der Kamera 4 wenigstens eine Erstaufnahme und eine Kontrollaufnahme erzeugt. Zwischendurch können zusätzliche Aufnahmen erstellt werden, aus denen gegebenenfalls die iterative Annäherung an die Betriebsposition abgeleitet werden kann.

Während es beim Stand der Technik erforderlich ist die Aufnahme auszudrucken, um aus dem Druckbild, anhand eines graphischen Verfahrens, den Fluchtpunkt zu ermitteln, wird der Fluchtpunkt, gemäß dem erfindungsgemäßen Verfahren, rein rechnerisch bestimmt, so dass ein Visualisieren oder Ausdrucken der Aufnahme zwar möglich, aber nicht notwendig ist.

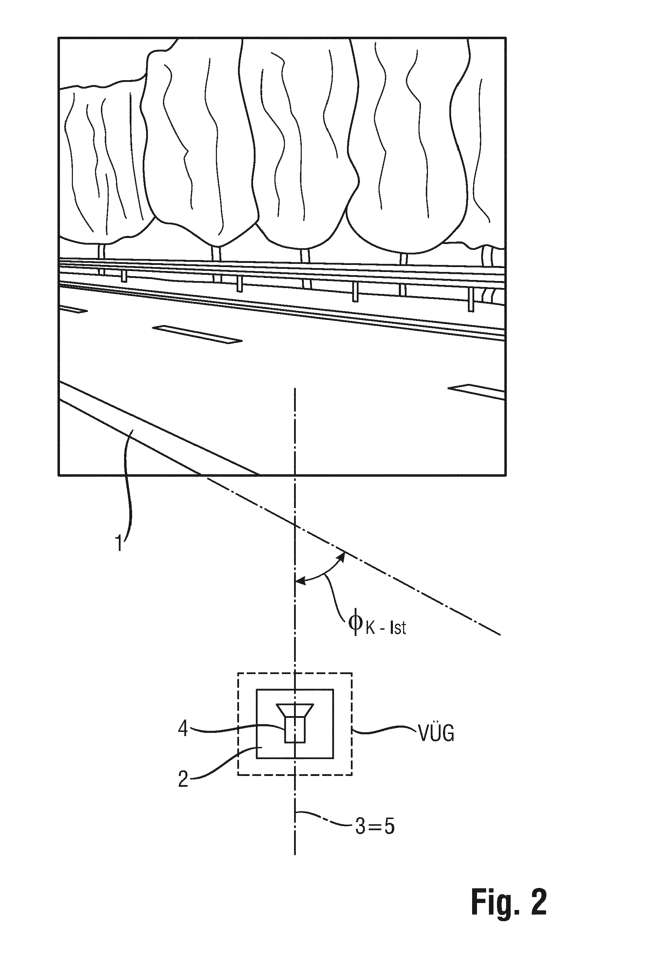

Die Figuren zur Erläuterung des erfindungsgemäßen Verfahrens Fig. 2-4, 6a und 7a, sollen temporäre oder gespeicherte Abbildungen auf einem Matrixempfänger der Kamera 4 bzw. deren Repräsentation im Arbeitsspeicher einer Recheneinheit der Kamera 4 darstellen. Somit handelt es sich bei der Breite der Abbildung nicht um eine Breite eines Druckbildes, sondern um eine Bildfeldbreite c, des Bildfeldes des Matrixempfängers der Kamera 4.

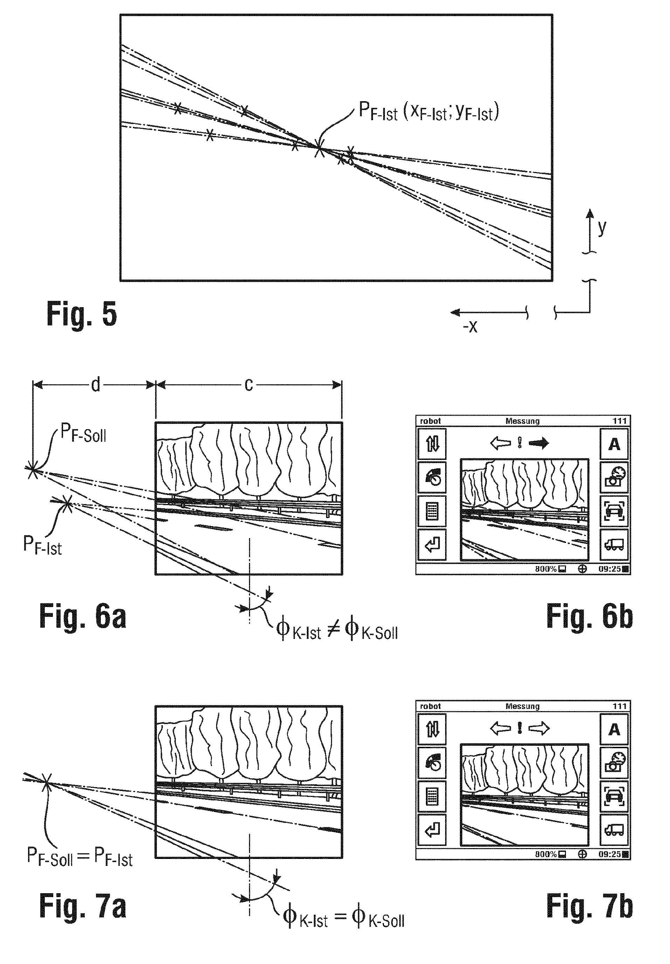

In den Fig. 6b und 7b ist jeweils eine Displayanzeige dargestellt in der die Abbildungen für den Bediener visualisiert sind. Zusätzlich zu der visualisierten Abbildung erhält der Bediener Informationen über Symbole, zu denen an späterer Stelle ausgeführt wird.

Aus der Abweichung der errechneten Lage des Ist-Fluchtpunkts P_{F-Ist} gegenüber der Lage des Soll-Fluchtpunktes P_{F-Soll} wird ein Wert ermittelt, aus dem auf den notwendigen Schwenkwinkel geschlossen wird, wenn das VÜG ausgerichtet werden soll, bzw. aus dem geschlossen werden kann, wie groß die Wahrscheinlichkeit ist, dass das VÜG unter einem vorgegebenen Soll-Radarwinkel Φ_{R-Soll} steht, wenn es um die Kontrolle der Ausrichtung geht. Diese Information wird dem Bediener vor Ort geeignet zur Verfügung gestellt, der daraufhin entscheiden kann, ob das VÜG betrieben werden kann, weil es sich innerhalb einer zulässigen Toleranz, in der Betriebsposition befindet, oder ob eine Ausrichtung in die Betriebsposition notwendig ist. Es könnte auch der Messbetrieb automatisch freigegeben bzw. gesperrt werden, abhängig davon, ob die Ausrichtung innerhalb einer zulässigen Toleranz ist.

Fig. 2 zeigt eine graphische Darstellung eines Digitalbildes einer Beispielsszene anhand derer die korrekte Aufstellung des VÜG überprüft werden soll. Vorzugsweise wird bei der Aufnahme der Beispielsszene darauf geachtet, dass sich keine Fahrzeuge im Objektfeld der Kamera 4 befinden, da diese Fahrbahnbegrenzungen und gegebenenfalls Fahrbahnmarkierungen bedecken könnten, deren Abbildung Bestimmung eines Fluchtpunktes beitragen. Zur Durchführung des Verfahrens muss, wie bereits erklärt, die dargestellte Abbildung nicht wie hier gezeigt, als visuell sichtbares Bild erzeugt werden, sondern kann auch nur als Digitalbild (Bilddatei) abgespeichert werden. Das Digitalbild wird zunächst mit einem geeigneten Schwellwert in ein Binärbild transformiert und anschließend einer Hough-Transformation zur Erkennung von Geraden, die insbesondere durch die Abbildung der Fahrbahnmarkierung generiert wurden, unterworfen. Alternativ kann das Digitalbild insbesondere zuerst einer Kantendetektion und das Ergebnis dann einer Hough-Transformation unterworfen werden, um Geraden zu erkennen.

Die Hough-Transformation ist ein robustes Verfahren um aus einem Binärbild, genauer gesagt aus einer hierfür stehenden Bilddatei, Geraden, Kreise, Ellipsen oder andere parametrierbare geometrische Formen zu extrahieren. Für die Bestimmung der Eigenschaften der geometrischen Form wird ein Parameter-Raum geschaffen, in dem für jeden Punkt des Originalbildes die Parameter der zu bestimmenden Formen eingetragen werden, also zum Beispiel die Steigung und der y-Achsenabschnitt bei Geraden, oder der Radius und der Mittelpunkt bei Kreisen. Es entsteht eine Art Häufigkeitsverteilung für die möglichen Parameter. Über eine Schwellwertentscheidung werden diejenigen Parameter verwendet, die am häufigsten auftreten. Das Verfahren wurde 1962 mit dem U.S.-Patent US 3,069,654 für IBM patentiert und in dem Fachartikel: Hough 1972: Duca, R.O. and P.E. Hart, Use of Hough Transformation to Detect Lines and Curves in Pictures, insbesondere für die Detektion von Geraden formuliert.

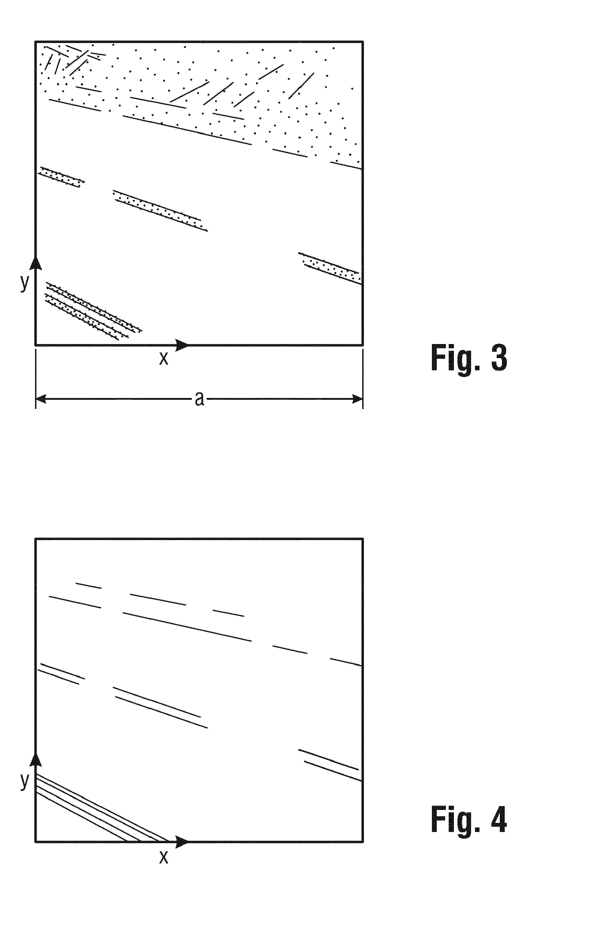

In **Fig. 3** ist das Ergebnis der Hough-Transformation in einem Kantenbild dargestellt. Aus der großen Anzahl von detektierten Geraden, müssen die für die Ermittlung eines Fluchtpunktes relevanten Geraden ausgewählt werden.

Für die in der **Fig. 2** dargestellte Szene wurde das VÜG für eine Linksmessung aufgestellt, das heißt, die anzumessenden Fahrzeuge kommen von links auf das VÜG zu, wenn die Fahrzeugfront angemessen und ein Frontfoto erstellt werden soll oder kommen von rechts auf das VÜG zu, wenn das Fahrzeugheck angemessen werden soll, insbesondere um den Fahrzeugführer bei Erstellung eines Fotos durch das Blitzlicht nicht zu blenden. Entsprechend müssen die relevanten Geraden im mathematischen Sinn eine negative Steigung aufweisen. Eine untere Grenze der Steigung ergibt sich aus der Abbildung für eine steilste Gerade (in der Abbildung das Linienstück in der linken unteren Ecke), sowie eine zusätzliche Toleranz. Es versteht sich von selbst, dass entsprechend bei einer Rechtsmessung die relevanten Geraden eine positive Steigung aufweisen müssen.

Die Steigung der Geraden im mathematischen Sinn ist bezogen auf ein Koordinatensystem, das durch das Bild vorgegeben ist. Dabei folgt die x-Achse den waagerechten Bildkanten ansteigend nach rechts und die y-Achse den senkrechten Bildkanten ansteigend nach oben. Der Ursprung des Koordinatensystems liegt unabhängig von der Messrichtung in der linken unteren Bildecke.

In **Fig. 4** sind aus dem Kantenbild gemäß **Fig. 3** nur die als relevant ermittelten Geraden, die für die Bestimmung des Ist-Fluchtpunktes P_{F-Ist} in Frage kommen, gezeigt. Die Steigung der gezeigten Geraden liegt hier in einem Bereich von 0 bis -0,77.

Die in **Fig. 4** gezeigten relevanten Geraden werden zur Ermittlung eines Ist-Fluchtpunktes P_{F-Ist} rechnerisch verlängert und deren fiktive Schnittpunkte errechnet.
Bei einer Visualisierung der Geraden und ihrer Schnittpunkte, wie in **Fig. 5** dargestellt, ist zu erkennen, dass das Gros der Schnittpunkte nahe beieinander liegt oder zusammen fällt. Zur Ermittlung des Ist-Fluchtpunktes P_{F-Ist} werden nur diese innerhalb einer vorgegebenen Standartabweichung liegenden Schnittpunkte herangezogen. Sie liegen bei einer Linksmessung links außerhalb des Bildes. Über die ausgewählten Schnittpunkte, wird der geometrische Mittelpunkt ermittelt, hier in **Fig. 5** als Kreuz dargestellt, das den Ist-Fluchtpunkt P_{F-Ist} bildet und für die Abschätzung des Ist-Kamerawinkels Φ_{K-Ist} und damit des Ist-Radarwinkels Φ_{R-Ist} verwendet wird.

Um zu überprüfen, ob der Ist-Kamerawinkel Φ_{K-Ist} dem Soll-Kamerawinkel Φ_{K-Soll} entspricht, muss sich der errechnete Abstand d des Ist-Fluchtpunktes P_{F-Ist} zum linken Bildfeldrand bei Linksmessung und zum rechten Bildfeldrand bei Rechtsmessung, aus der Beziehung d = c(Φ_{K-Soll}/α -1/2) ergeben.
Dabei ist c die Bildfeldbreite der Kamera 4, bestimmt durch die Geometrie des Matrixempfängers, Soll-Kamerawinkel Φ_{K-Soll} und der Öffnungswinkel α des Objektives der Kamera 4.

Für die Linksmessung ist d gleich x_{F-Ist}.
Für die Rechtsmessung ist d gleich x_{F-Ist} abzüglich der Bildfeldbreite c.
Bei einer geforderten maximal zulässigen Abweichung des Ist-Kamerawinkels Φ_{K-Ist} vom Soll-Kamerawinkel Φ_{K-Soll} von z. B. ± 0,5 ergibt sich je nach verwendeten Brennweiten der Kamera 4 des VÜGs ein Toleranzbereich δx_{F} für x_{F-Ist} in dem der aus den Bilddaten berechnete Ist-Fluchtpunkt P_{F-Ist} liegen muss.

Aus δx_{F} multipliziert mit dem Quotienten aus dem Öffnungswinkel α und der Bildfeldbreite c ergibt sich der zulässige Toleranzbereich δΦ_{K-Soll} für den Soll-Kamerawinkel und entsprechend der zulässige Toleranzbereich δΦ _{R-Soll} für den Soll-Radarwinkel.

Die gewonnenen Daten werden für den Bediener des VÜGs aufbereitet, damit er entscheiden kann, ob mit der gegenwärtigen Ausrichtung des Radarsensors 2 gearbeitet werden kann oder ob eine Verbesserung der Ausrichtung durchzuführen ist bzw. bei einer automatisierten Entscheidung kann das VÜG den Messbetrieb sperren, wenn die Abweichung δx_{F} zu groß ist. Eine Ausrichtung erfolgt iterativ durch Schwenken des VÜGs, während mit der Kamera 4 weitere Aufnahmen erstellt werden, aus denen wie erläutert der jeweilige x_{F-Ist}-Wert des Ist-Fluchtpunktes P_{F-Ist} ermittelt wird, bis dieser innerhalb der Toleranzgrenze um den Soll-Fluchtpunkt P_{F-Soll} liegt. Die Kameraachse 5 schließt dann einen Ist-Kamerawinkel Φ_{K-Ist} mit dem Fahrbahnrand 1 ein, der innerhalb der Toleranzgrenze um den Soll-Kamerawinkel Φ_{K-Soll} liegt. Da die Kameraachse 5 und die Radarachse 3 einen festen Winkel miteinander einschließen, den sie auch in der Betriebsposition des VÜGs miteinander einschließen sollen, liegt auch der Ist-Radarwinkel Φ_{R-Ist} innerhalb der Toleranzgrenze um den Soll-Radarwinkel Φ_{R-Soll}.

Da die Breite c des Bildfeldes des Matrixempfängers einer Kamera 4 eine feste Größe ist, kann über den Öffnungswinkel α durch Verwendung von Objektiven mit unterschiedlichen Brennweiten, die bekannt sein müssen, das VÜG an unterschiedliche Messbedingungen angepasst werden, die sich z. B. durch unterschiedlich vorgegebene Soll-Kamerawinkel Φ_{K-Soll} unterscheiden. Standardmäßig kommen zwei Kamerawinkel zum Einsatz, 17,5° für ankommenden und abfließenden Verkehr und zusätzlich 13,2° für abfließenden Verkehr. Die sich damit unterschiedlich ergebenden Winkel den die Kameraachse 5 und die Radarachse 3 in der Betriebsposition des VÜG miteinander einschließen können, werden werksseitig zueinander justiert.

Wie bereits erläutert kann das Verfahren zum Ausrichten eines VÜGs und zur Kontrolle der Ausrichtung verwendet werden.

Die Kontrolle kann manuell durch einen Bediener oder automatisch im Rahmen von System-Tests, die z. B. vor Beginn einer jeden neuen Messreihe stattfinden, ausgelöst werden. Das Ergebnis kann durch die Anzeige konkreter Werte, z. B. der Abweichung des Ist-Radarwinkels Φ_{R-Ist} vom Soll-Radarwinkel Φ_{R-Soll} dargestellt werden oder durch eine sich ändernde Anzeige von Symbolen, z. B. einer Ampel die grün, gelb oder rot anzeigt. Darüber hinaus kann die Drehrichtung, welche erforderlich ist, um sich dem Soll-Radarwinkel Φ_{R-Soll} anzunähern durch z. B. einen Pfeil angegeben werden. Bei Feststellung von Abweichungen außer Toleranz, kann das Messen verhindert werden, indem ein Aktivieren des Messbetriebes des Radarsensors 2 verhindert wird.

In **Fig. 6a** ist eine Aufnahme gezeigt, bei der die Kameraachse 5 mit dem Fahrbahnrand 1 einen Ist-Kamerawinkel Φ_{K-Ist} einschließt, der nicht dem Soll-Kamerawinkel Φ_{K-Soll} entspricht. Durch Volllinien sind die Geraden dargestellt deren Schnittpunkt den errechneten Ist-Fluchtpunkt P_{F-Ist} bestimmt. Durch Strichlinien sind die Geraden dargestellt, deren Schnittpunkt den Soll-Fluchtpunkt P_{F-Soll} repräsentiert.

In **Fig. 7a** fallen die Volllinien und die Strichlinien zusammen, sofern der Ist-Kamerawinkel Φ_{K-Ist} dem Soll-Kamerawinkel Φ_{K-Soll} entspricht.

Die Aufnahmen können wie in den Fig. 6b und 7b innerhalb einer Maske auf einem Display zur Anzeige gebracht werden, wobei in der Maske zusätzliche Informationen zur Ausrichtung gegeben sein können. Bei nicht korrekter Ausrichtung wie in Fig. 6b gezeigt kann z. B. die Richtung in der geschwenkt werden muss durch einen farbigen Pfeil angezeigt werden. Bei korrekter Ausrichtung wie in Fig. 7b gezeigt, kann z. B. ein grünes Achtungszeichen aufleuchten.

### Bezugszeichenliste

- 1: Fahrbahnrand
- 2: Radarsensor
- 3: Radarachse
- 4: Kamera
- 5: Kameraachse
- 6: Visierlinie

- VÜG: Verkehrsüberwachungsgerät
- Φ_{K-Ist}: Ist-Kamerawinkel
- Φ_{K-Soll}: Soll-Kamerawinkel
- P_{F-Ist}: Ist-Fluchtpunkt
- P_{F-Soll}: Soll-Fluchtpunkt
- a: Breite eines Druckbildes
- b: Abstand eines Fluchtpunktes von einem Rand eines Druckbildes
- c: Bildfeldbreite auf einem Matrixempfänger
- d: Abstand eines Fluchtpunktes von einem Rand eines Matrixempfängers
- xₛ: Schnittpunkt von die Fahrbahnränder überdeckenden Geraden (Stand der Technik)

## Patentansprüche

1. Verfahren zur Ausrichtung eines Verkehrsüberwachungsgerätes (VÜG) in eine Betriebsposition für einen Radarsensor (2) zu einem Fahrbahnrand (1) einer Fahrbahn, wobei das VÜG einen Radarsensor (2) mit einer Radarachse (3) und eine Kamera (4) mit einem Matrixempfänger und einer Kameraachse (5) umfasst, die in einer Betriebsposition des Radarsensors (2) einen Soll-Radarwinkel (Φ_{R-Soll}) und einen Soll-Kamerawinkel (Φ_{K-Soll}) mit dem Fahrbahnrand (1) einschließen, bei dem das VÜG in einem Abstand zu dem Fahrbahnrand (1) in einer Ausgangsposition aufgestellt wird, die Kamera (4) wenigstens eine Abbildung von der Fahrbahn erstellt, aus der Abbildung Geraden in Fahrtrichtung abgeleitet werden, ein Ist-Fluchtpunkt (P_{F-Ist}) für die Geraden bestimmt wird und aus dem Ist-Fluchtpunkt (P_{F-Ist}) der Ist-Kamerawinkel (Φ_{K-Ist}) ermittelt wird, **dadurch gekennzeichnet,**
**dass** bei der Montage des VÜG die Kamera (4) und der Radarsensor (2) so zueinander angeordnet werden, dass die Kameraachse (5) und die Radarachse (3) in einem bekannten Winkel zueinander ausgerichtet sind,
in der Ausgangsposition mit Augenmaß der Soll-Kamerawinkel (Φ_{K-Soll}) näherungsweise eingestellt wird,
eine erste Abbildung in der Ausgangsposition als Digitalbild erstellt wird, aus der rechnerisch der Ist-Fluchtpunkt (P_{F-Ist}) ermittelt und mit einem vom Soll-Kamerawinkel (Φ_{K-Soll}) abhängigen, vorgegebenen Soll-Fluchtpunkt (P_{F-Soll}) verglichen wird, das VÜG solange horizontal geschwenkt wird und währenddessen weitere Abbildungen erstellt werden, aus denen jeweils der momentane Ist-Fluchtpunkt (P_{F-Ist}) ermittelt und mit dem vorgegebenen Soll-Fluchtpunkt (P_{F-Soll}) verglichen wird, bis dessen Abweichung vom Soll-Fluchtpunkt (P_{F-Soll}) innerhalb einer vorgegebenen Toleranzgrenze liegt, womit der Radarsensor (2) in Betriebsposition ausgerichtet ist.

2. Verfahren zur Ausrichtung nach Anspruch 1, **dadurch gekennzeichnet,**
**dass** sofern der bekannte Winkel zwischen der Radarachse (3) und der Kameraachse (5) nicht ein Winkel ist bei dem sich auch die Kamera (4) in ihrer Betriebsposition befindet, wenn der Radarsensor (2) ausgerichtet ist, wird die Kamera (4) nun in ihre Betriebsposition um einen vorgegebenen Schwenkwinkel geschwenkt, womit auch die Kamera (4) in Betriebsposition ausgerichtet ist und mit dem Fahrbahnrand (1) einen Soll-Kamerawinkel (Φ_{K-Soll}) einschließt.

3. Verfahren zur Ausrichtung nach Anspruch 1, **dadurch gekennzeichnet,**
**dass** bei der rechnerischen Ermittlung des Ist-Fluchtpunktes (P_{F-Ist}) der Geraden nur die sich zwischen den Geraden ergebenden Schnittpunkte herangezogen werden, die abhängig von der Lage des Soll-Fluchtpunktes (P_{F-Soll}) relativ zum Digitalbild seitlich außerhalb des Digitalbildes liegen und aus denen der geometrische Mittelpunkt als Ist-Fluchtpunkt (P_{F-Ist}) bestimmt wird.

4. Verfahren zur Ausrichtung nach Anspruch 1, **dadurch gekennzeichnet,**
**dass** das Digitalbild zunächst mit einem geeigneten Schwellwert in ein Binärbild transformiert wird und anschließend einer Hough-Transformation zur Erkennung von Geraden, die insbesondere durch die Abbildung der Fahrbahnmarkierung generiert wurden, unterworfen wird.

5. Verfahren zur Ausrichtung nach Anspruch 1, **dadurch gekennzeichnet,**
**dass** das Digitalbild zuerst einer Kantendetektion und das Ergebnis einer Hough-Transformation unterworfen wird, zur Erkennung von Geraden, die insbesondere durch die Abbildung der Fahrbahnmarkierung generiert wurden.

6. Verfahren zur Ausrichtung nach Anspruch 1, **dadurch gekennzeichnet,**
**dass** die Lage des Soll-Fluchtpunktes (P_{F-Soll}) durch seinen Abstand d vom Rand des Matrixempfängers bestimmt ist, wobei sich d aus der Formel d = c(Φ_{K-Soll}/α -1/2) ergibt, in der c die Bildfeldbreite der Kamera (4), bestimmt durch die Geometrie des Matrixempfängers und α der Öffnungswinkel des Objektives der Kamera (4) ist.

7. Verfahren zur Kontrolle und gegebenenfalls Korrektur von Abweichungen der Ausrichtung eines gemäß Anspruch 1 zuvor ausgerichteten Verkehrsüberwachungsgerätes (VÜG) bei dem analog dem Verfahren nach Anspruch 1 :
eine erste Abbildung als Digitalbild erstellt wird,
rechnerisch der Ist-Fluchtpunkt (P_{F-Ist}) ermittelt und mit einem vom Soll-Kamerawinkel (Φ_{K-Soll}) abhängigen, vorgegebenen Soll-Fluchtpunkt (P_{F-Soll}) verglichen wird und
das VÜG, sofern die Abweichung des Ist-Fluchtpunktes (P_{F-Ist}) vom Soll-Fluchtpunkt (P_{F-Soll}) nicht innerhalb einer vorgegebenen Toleranzgrenze liegt, solange horizontal geschwenkt wird und währenddessen weitere Abbildungen erstellt werden, aus denen jeweils der momentane Ist-Fluchtpunkt (P_{F-Ist}) ermittelt und mit dem vorgegebenen Soll-Fluchtpunkt (P_{F-Soll}) verglichen wird, bis dessen Abweichung vom Soll-Fluchtpunkt (P_{F-Soll}) innerhalb der vorgegebenen Toleranzgrenze liegt.

8. Verfahren zur Kontrolle nach Anspruch 7, **dadurch gekennzeichnet,**
**dass** sofern die Kamera (4) nach dem Einrichten der Betriebsposition des Radarsensors (2) um einen vorgegebenen Schwenkwinkel in ihre Betriebsposition geschwenkt wurde, für diese Betriebsposition der Kamera (4) ein neuer Soll-Fluchtpunkt (P_{F-Soll neu}) vorgegeben wird, mit dem der momentane Ist-Fluchtpunkt (P_{F-Ist}) verglichen wird, um die korrekte Ausrichtung zu kontrollieren.

9. Verfahren zur Kontrolle nach Anspruch 8, **dadurch gekennzeichnet,**
**dass**, sofern der Ist-Fluchtpunkt (P_{F-Ist}) nicht innerhalb einer für den neuen Soll-Fluchtpunkt (P_{F-Soll-neu}) vorgegebenen Toleranz liegt, die Verfahrensschritte des Anspruches 7 wiederholt werden bis der momentane Ist-Fluchtpunkt (P_{F-Ist}) innerhalb der vorgegebenen Toleranzgrenze liegt.

10. Verfahren zur Kontrolle nach Anspruch 8, **dadurch gekennzeichnet,**
**dass** Maßnahmen getroffen werden, die eine Verwertung nachfolgender Aufnahmen untersagen, wenn ein momentaner Ist-Fluchpunkt (P_{F-Ist}) ermittelt wird der nicht innerhalb der vorgegebenen Toleranzgrenze liegt.
